Europäisches Patentamt

European Patent Office

Office européen des brevets

(11) Publication number: 0 231 392
A1

# EUROPEAN PATENT APPLICATION
published in accordance with Art. 158(3) EPC

(21) Application number: 86904405.7

(22) Date of filing: 25.07.86

Data of the international application taken as a basis:

(86) International application number:
PCT/JP86/00393

(87) International publication number:
WO87/00987 (12.02.87 87/04)

(51) Int. Cl.³: H 02 K 7/116

(30) Priority: 30.07.85 JP 168341/85

(43) Date of publication of application:
12.08.87 Bulletin 87/33

(84) Designated Contracting States:
DE FR GB IT SE

(71) Applicant: TEIJIN SEIKI CO. Ltd.
Higobashi Center Building 9-1, Edobori 1-chome
Nishi-ku Osaka 550(JP)

(72) Inventor: FUKUI, Kiyozumi
Gifu No. 2 Factory Teijin Seiki Co., Ltd. 1414
Goshono Tarui-cho Fuwa-gun Gifu 503-21(JP)

(74) Representative: Patentanwälte TER MEER - MÜLLER -
STEINMEISTER
Mauerkircherstrasse 45
D-8000 München 80(DE)

(54) REDUCTION GEAR PROVIDED WITH DRIVING POWER SOURCE.

(57) A reduction gear provided with a driving power source,
which is provided with an eccentrically moving speed reduc-
er (7) having a fixed shaft (16), and a hollow crank member
(18) around the fixed shaft (16), and adapted to reduce the
rotary force, which is applied to the crank member (18), by an
eccentric movement; and an electric rotary force generating
means (41) having a magnet (44), a winding (42) and an iron
core (43) and adapted to apply a rotary force to the crank
member (18), the magnet (44) being fixed to the inner circum-
ferential surface of the crank member (18) in the eccentrically
moving speed reducer (7), the iron core (43) being fixed to the
outer circumferential surface of the fixed shaft (16) in the
eccentrically moving speed reducer (7).

FIG. I

EP 0 231 392 A1

DESCRIPTION

## TITLE OF THE INVENTION

"REDUCTION GEAR APPARATUS WITH DRIVE MEANS"

## TECHNICAL FIELD

The present invention relates in general to a reduction gear apparatus having drive means incorporated therein.

## BACKGROUND ART

Conventionally, as a reduction gear apparatus having drive means incorporated therein, for example, there has been known a reduction gear apparatus described in Japanese Utility Model Laid-Open Publication No. 49-33311. Such a reduction gear apparatus with drive means has a differential reduction gear arranged in the interior of a stator (i.e., an iron core having a winding wound therearound) fixedly mounted on the inner peripheral surface of the casing, and has a solid rotor (magnet) fixedly mounted on the outer peripheral surface of an input member of the differential reduction gear.

However, since the solid rotor of the reduction gear apparatus noted above is fixedly mounted on the outer peripheral surface of the input member, if it is rotated at high speeds, the sinter component forming the solid rotor separates one after another from the outer peripheral surface of the solid rotor and scatters in all directions due to the centrifugal force resulting from the rotation of the solid rotor at high speeds. For this reason, the maximum rotation of the solid rotor is of the order of 5000 to 8000 rpm, and as a consequence, in the case that the output to be transmitted to the reduction gear is assumed to be constant, the rotational torque of the solid rotor is necessarily increased. As a consequence, the shaft diameter of an electric motor of the reduction gear increases, thereby causing drawbacks that the whole assembly of the conventional reduction gear apparatus with drive means becomes extremely large in size and extremely heavy in weight.

It is, accordingly, the object of the present invention to provide an improved reduction gear apparatus with drive means which, as a whole, is small in size and light in weight by enabling the magnet to rotate at high speeds without separating and scattering the sinter component of the magnet.

DISCLOSURE OF THE INVENTION

In accordance with an important aspect of the present invention, there is provided a reduction gear apparatus with drive means which comprises an eccentric-motion type reduction gear comprising a fixed shaft and a hollow crank member coaxially disposed around the fixed shaft, and adapted to reduce a rotational force exerted to the hollow crank member by eccentric motion of the reduction gear, and electric type rotational force generating means comprising a magnet, a winding and an iron core having the winding wound therearound, and adapted to exert a rotational force to the hollow crank member, the magnet being fixedly mounted on an inner peripheral surface of the hollow crank member of the eccentric-motion type reduction gear so that an outer peripheral surface of the magnet is covered completely by the hollow crank member, the iron core being fixedly mounted on an outer peripheral surface of the fixed shaft of the eccentric-motion type reduction gear.

In the reduction gear apparatus with drive means constructed in accordance with the present invention, as the winding is connected electrically, the magnet and the crank member of the aforementioned eccentric-motion type reduction gear rotate together as one body. This rotation is reduced by eccentric motion of the reduction gear. In this instance, the magnet is fixedly mounted on the inner peripheral surface of the crank member so that the outer peripheral surface of the magnet is covered completely by the crank member. Therefore, even if the crank member and the magnet are rotated at high speeds and a large centrifugal force resulting from the high speed rotation is exerted on the outer peripheral surface of the magnet, the sinter component forming the magnet does not separate and scatter in all directions. Thus, the crank member and the magnet are capable of being rotated at high speeds, and in the case that the output to be transmitted to the reduction gear is assumed to be constant, the rotational torque of the magnet can be reduced. As a consequence, the outer diameter of the electric type rotational force generating means is capable of being reduced cosiderably, and thereby enables the whole assembly of the reduction gear apparatus with drive means according to the present invention to be small in size and light in weight.

BRIEF DESCRIPTION OF THE DRAWINGS

FIG. 1 is a cross sectional view showing a preferred embodiment constructed in accordance with the present invention, and

FIG. 2 is a cross sectional view substantially taken along line A-A indicated in FIG. 1.

BEST MODE FOR CARRYING OUT THE INVENTION

The reduction gear apparatus with drive means according to the present invention will hereinafter be described in conjunction with the accompanying drawings.  FIG.

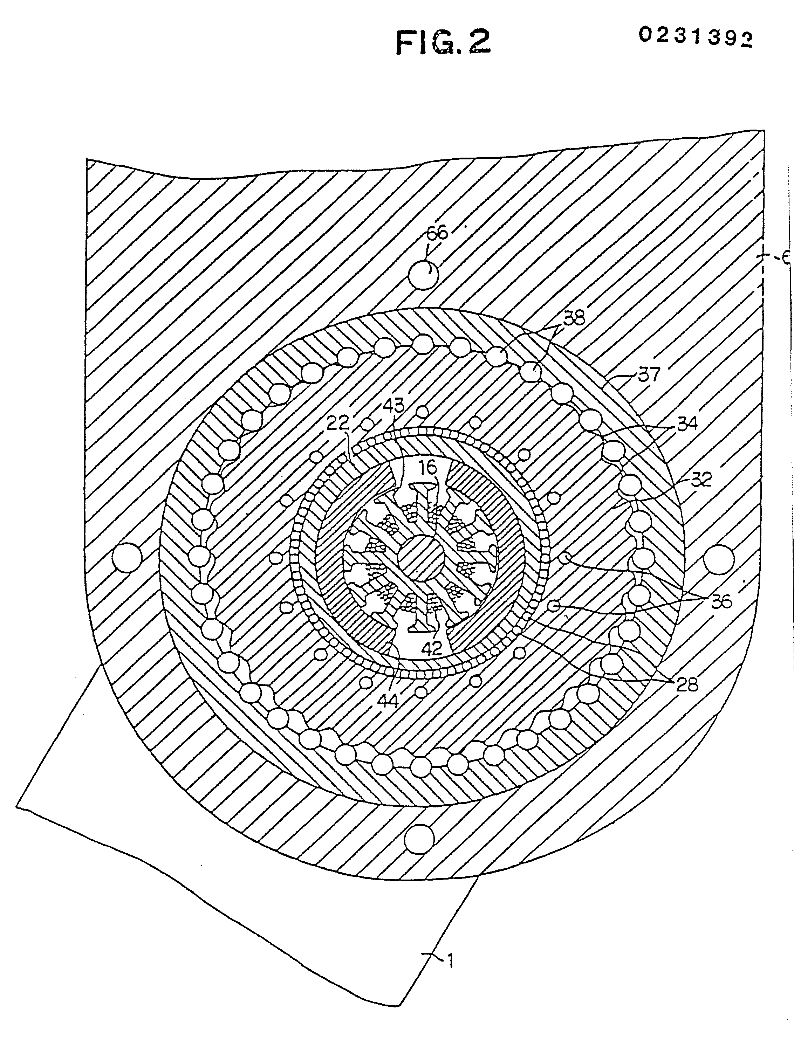

1 and FIG. 2 of the drawings are views showing one embodiment constructed in accordance with the present invention, respectively.

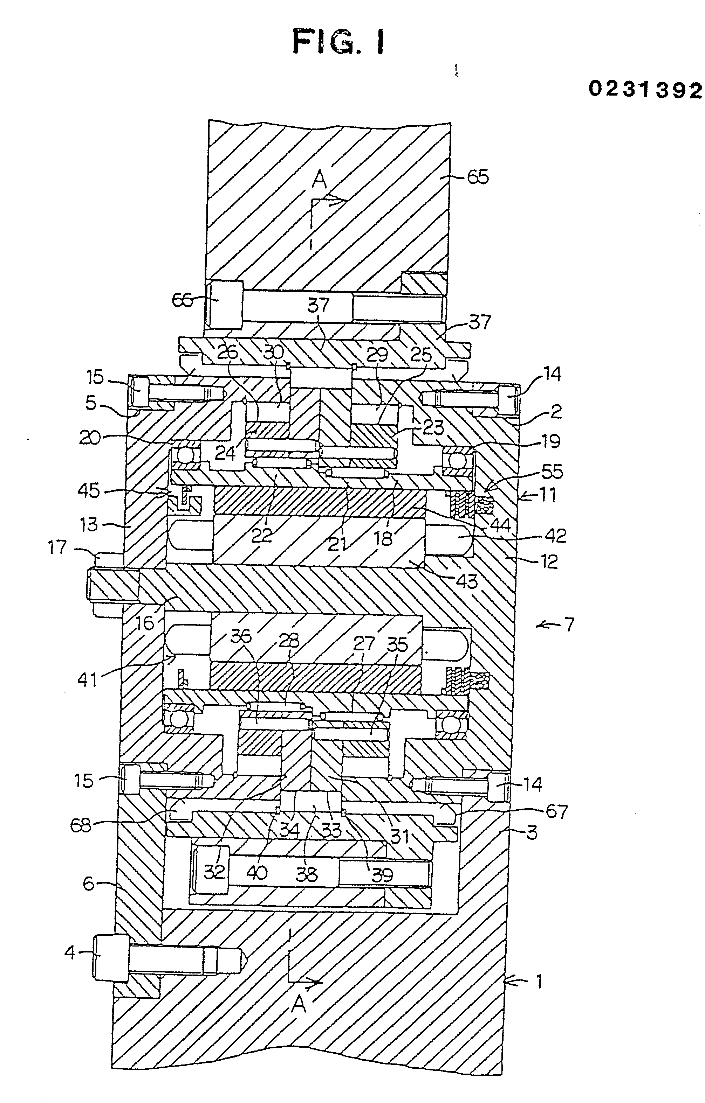

In FIGS. 1 and 2, reference numerals 1 and 65 designate a first arm and a second arm of, for example, an industrial robot, respectively.  The first arm 1 of the industrial robot is formed at one side portion of the forward end thereof with a bracket 3 which is formed with a bore 2 passing therethrough.  To the other side portion of the forward end of the first arm 1 is attached a bracket 6 formed with a bore 5 passing therethrough by a plurality of bolts 4.

Designated by reference numeral 7 is the reduction gear apparatus with drive means according to the present invention which is disposed between the axially opposed brackets 3 and 6 of the first arm 1.  The reduction gear apparatus with drive means 7 of the present invention comprises a reduction gear 11 of the eccentric-motion type which is normally called a compound differential planetary reduction gear.  This eccentric-motion type reduction gear 11 comprises a first cover 12 of cylindrical configuration having a bottom portion and a second cover 13 of cylindrical configuration having a bottom portion. These first and second covers 12 and 13 are opposed to each other at the opening sides thereof and spaced axially. The first cover 12 is attached to the bracket 3 by a plurality of bolts 14 with the bottom portion of the first cover 12 inserted in the through bore 2 of the bracket 3, while the second cover 13 is attached to the bracket 6 by a plurality of bolts 15 with the bottom portion of the second cover 13 also inserted in the through bore 5 of the bracket 6. The first cover 12 has at the center of the axially inner face of the bottom portion a fixed shaft 16 extending axially, the forward end of which extends through a central bore in the second cover 13 and is secured to the second cover 13 by a nut 17 screwed on the forward end of the fixed shaft 16. Reference numeral 18 is an axially extending hollow crank member which is rotatably supported at the one end thereof on the inner peripheral surface of the cylindrical portion of the first cover 12 through a bearing 19 and at the other end thereof on the inner peripheral surface of the cylindrical portion of the second cover 13 through a bearing 20. This hollow crank member 18 is coaxially disposed around the fixed shaft 16 of the first cover 12. The hollow crank member 18 is provided at the axially intermediate portion of the outer peripheral surface thereof with a pair of eccentric cam portions 21 and 22 which are spaced apart from each other 180° in phase. Reference numerals 23 and 24 denote a pair of axially spaced small pinions which are formed at their outer peripheral surfaces with a plurality of external teeth 25 and external teeth 26, respectively. These small pinions 23 and
24 have the cam portions 21 and 22 of the crank member 18
inserted therein with needle bearings 27 and 28 interposed
between the pinions and cam portions, respectively. One of
the small pinions 23 meshes at the whole external teeth 25
thereof with a pin wheel 29 formed in the inner peripheral
surface of the cylindrical portion of the first cover 12 and
having a lightly more pin teeth than the external teeth 25.
Likewise, the other small pinion 24 meshes at the whole
external teeth 26 thereof with a pin wheel 30 formed in the
inner peripheral surface of the cylindrical portion of the
second cover 13 and having a lightly more pin teeth than the
external teeth 26. Reference numerals 31 and 32 indicate a
pair of large pinions formed at their outer peripheral
surfaces with external teeth 33 and 34 and larger in diameter
than the small pinions 23 and 24, respectively. These large
pinions 31 and 32 also have the cam portions 21 and 22 of the
crank member 18 inserted therein, respectively, with the above
noted needle bearings 27 and 28 interposed therebetween. The
large pinions 31 and 32 are connected through a plurality of
pins 35 and 36 to the small pinions 23 and 24, respectively,
and also the radially outward end portions thereof are
projected radially outward from the space defined by the side
faces of the axially opposed small pinions 23 and 24. A
generally cylindrically shaped case 37 is formed at its inner
peripheral surface with a pin wheel 38 which has a lightly
more pin teeth than the external teeth 33 and 34 of the large
pinions 31 and 32 and which meshes at the whole pin teeth with the large pinions 31 and 32. It is noted that since the whole pin teeth of the pin wheel 38 mesh with the external teeth 33 and 34 of the large pinions 31 and 32, this arrangement serves as a radial bearing, and as a consequence, it is not necessary, in this embodiment, to provide a bearing between the inner peripheral surface of the case 37 and the outer peripheral surfaces of the first and second covers 12 and 13. In addition, since the pin wheel 38 are held in position at its opposite sides by annular stop rings 39 and 40 mounted in the inner peripheral surface of the case 37 and also held at its opposite sides by the first and second covers 12 and 13, the pin wheel 38 resists thrust (i.e., loads acting in the aixal direction of a shaft) acting between the first arm 1 and the second arm 65 of the industrial robot. The aforementioned first cover 12, second cover 13, crank member 18, small pinions 23 and 24, large pinions 31 and 32, and case 37 as a whole constitute the aforementioned eccentric-motion type reduction gear 11 which is adapted to reduce a rotational force exerted to the crank member 18 and transmit the reduced rotational force to the case 37. Reference numeral 41 generally designates electric type rotational force generating means disposed within a cylindrically shaped space between the fixed shaft 16 and the crank member 18. This rotational force generating means 41 is normally called a brushless DC servo motor. The rotational force generating means 41 comprises a winding 42 and an iron core 43 having the winding 42 wound therearound, and the iron core 43 is fixedly mounted on the outer peripheral surface of the fixed shaft 16. In addition, on the inner peripheral surface of the crank member 18 is
fixedly mounted a magnet 44 formed of a sinter, and the magnet
44 is opposed to the iron core 43. Reference numeral 45
indicates a rotary encoder which is adapted to detect rotation
of the crank member 18 and electrically control the winding 42
wound around the iron core 43. The aforementioned winding 42,
iron core 43, magnet 44 and rotary encoder 45 as a whole
constitute the aforementioned rotational force generating
means 41. Reference numeral 55 is a negative electromagnetic
brake which is adapted to exert a brake force on the crank
member 18. The above noted case 37 is inserted in and
attached to the second arm 65 of the industrial robot by a
plurality of bolts 66. Designated by reference numerals 67
and 68 are sealing members, respectively.

The operation of the embodiment constructed in
accordance with the present invention will hereinafter be
described.

First, the winding 42 is connected electrically, so
that the magnet 44 and accordingly the crank member 18
rotates. In this instance, since the outer peripheral surface
of the magnet 44 is covered completely by the crank member 18,
the sinter component of the magnet 44 does not separate and
scatter in all directions from the outer peripheral surface,
and thus the magnet 44 is capable of rotating at high speeds.
The rotation of the crank member 18 causes the small pinions
23, 24 and the large pinions 31, 34 to eccentrically rotate
around the crank member 18. In this instance, since the
external teeth 25 and 26 of the small pinions 23 and 24 are held in meshing engagement with the pin teeth of the fixed pin wheel 29 and 30, the rotation of the crank member 18 is considerably reduced and transmitted to the case 37. This permits the second arm 65 of the industrial robot to relatively rotate at a predetermined speed to the first arm 1 of the industrial robot.

INDUSTRIAL APPLICABILITY

The reduction gear apparatus with drive means according to the present invention is applicable to a reduction gear apparatus of a robot for a manufacturing industry, mining industry, atomic industry and the like. Particularly, the reduction gear apparatus with drive means according to the present invention is applicable to a reduction gear apparatus of a robot for production process, precision inspection and high accuracy operation, as being small in size and light in weight.

CLAIMS

1.    A reduction gear apparatus with drive means comprising

an eccentric-motion type reduction gear (11) comprising a fixed shaft (16) and a hollow crank member (18) coaxially disposed around said fixed shaft (16), and adapted to reduce a rotational force exerted to said hollow crank member (18) by eccentric motion of said reduction gear (11), and

electric type rotational force generating means (41) comprising a magnet (44), a winding (42) and an iron core (43) having said winding (42) wound therearound, and adapted to exert a rotational force to said hollow crank member (18),

said magnet (44) being fixedly mounted on an inner peripheral surface of said hollow crank member (18) of said eccentric-motion type reduction gear (11) so that an outer peripheral surface of said magnet (44) is covered completely by said hollow crank member (18),

said iron core (43) being fixedly mounted on an outer peripheral surface of said fixed shaft (16) of said eccentric-motion type reduction gear (11).

2.    A reduction gear apparatus with drive means as set forth in claim 1, in which said eccentric-motion type reduction gear (11) further comprises a pair of covers (12, 13) formed at their inner peripheral surfaces with pin wheels (29, 30), respectively, and spaced axially, a pair of small pinions (23, 24) each formed with external teeth (25, 26) less than pin teeth of said pin wheels (29, 30), a pair of large pinions (31, 32) each formed with external teeth (33, 34) and larger in diameter than said small pinions (23, 24), and a generally cylindrically shaped case (37) formed at its inner peripheral surface with a pin wheel (38) having more pin teeth than said external teeth (33, 34) of said large pinions (31, 32), in which one of said covers (12, 13) has said fixed shaft (16) at the center thereof, in which said hollow crank member (18) is rotatably supported on said covers (12, 13) and has a pair of eccentric cam portions (21, 22) thereon, the cam portions (21, 22) being inserted in said small pinions (23, 24) with needle bearings (27, 28) interposed therebetween, in which said small pinions (23, 24) mesh at the whole external teeth (25, 26) thereof with said pin wheels (29, 30) of said covers (12, 13), respectively, and in which said large pinions (31, 32) respectively have said cam portions (21, 22) of said hollow crank member (18) inserted therein with said needle bearings (27, 28) interposed therebetween, and said large pinions (31, 32) mesh at the whole external teeth (33, 34) thereof with said pin wheel (38) of said case (37).

3.     A reduction gear apparatus with drive means as set forth in claim 2, in which said covers (12, 13) are fixedly mounted to a first arm (1) of an industrial robot and said case (37) is fixedly mounted to a second arm (65) of said industrial robot.

4.     A reduction gear apparatus with drive means as set forth in claim 2, in which said pin wheel (38) of said case (37) is held at its opposite sides by annular stop rings (39, 40) mounted in said case (37) and by said covers (12, 13) so that said pin wheel (38) resists thrust loading acting between said reduction gear (11) and said case (37).

5.      A reduction gear apparatus with drive means as set forth in claim 1, in which said rotational force generating means (41) further comprises a rotary encoder (45) which is adapted to detect rotation of said crank member (18) and electrically control said winding (42), and a negative electromagnetic brake (55) which is adapted to exert a brake force to said crank member (18).

FIG. I

0231392

FIG.2   0231392

# INTERNATIONAL SEARCH REPORT

International Application No. PCT/JP86/00393

---

**I. CLASSIFICATION OF SUBJECT MATTER** (if several classification symbols apply, indicate all) [3]

According to International Patent Classification (IPC) or to both National Classification and IPC

Int.Cl$^4$ H02K7/116

---

**II. FIELDS SEARCHED**

| Minimum Documentation Searched [4] | |
|---|---|
| Classification System | Classification Symbols |
| IPC | H02K7/10, 7/116 |

| Documentation Searched other than Minimum Documentation to the Extent that such Documents are Included in the Fields Searched [5] | |
|---|---|
| Jitsuyo Shinan Koho | 1926 – 1985 |
| Kokai Jitsuyo Shinan Koho | 1971 – 1985 |

---

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | JP, B2, 58-2543 (Go Mutsukazu, Shinjo Kinichi) 17 January 1983 (17. 01. 83) Column 2, lines 27 to 35, Figs. 1 to 2 (Family: none) | 1, 5 |
| Y | JP, U, 49-43710 (Mitsubishi Electric Corporation) 17 April 1974 (17. 04. 74) Figs. 5 to 6 (Family: none) | 1, 5 |
| Y | JP, A, 58-95974 (La Société Anonyme la Cullen) 7 June 1983 (07. 06. 83) P.6, upper left column, lines 3 to 10, Figs. 1 to 4 & FR, B. 2516843 & EP, B, 80416 | 1, 5 |
| E | JP, U, 60-132166 (Yasukawa Electric Mfg. Co., Ltd.) 4 September 1985 (04. 09. 85) Figs. 3 to 4 (Family: none) | 1, 5 |

---

* Special categories of cited documents: [15]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

---

**IV. CERTIFICATION**

| Date of the Actual Completion of the International Search [2] | Date of Mailing of this International Search Report [2] |
|---|---|
| September 2, 1986 (02. 09. 86) | September 16, 1986 (16. 09. 86) |
| International Searching Authority [1] | Signature of Authorized Officer [20] |
| Japanese Patent Office | |

Form PCT/ISA/210 (second sheet) (October 1981)

| FURTHER INFORMATION CONTINUED FROM THE SECOND SHEET | |
|---|---|
| A | JP, A, 57-208838 (Fujitsu, Ltd.)<br>22 December 1982 (22. 12. 82)<br>(Family: none) | 2 - 4 |

**V.☐ OBSERVATIONS WHERE CERTAIN CLAIMS WERE FOUND UNSEARCHABLE [10]**

This international search report has not been established in respect of certain claims under Article 17(2)(a) for the following reasons:

1.☐ Claim numbers_ _ _ _ _ _ _ _ _ _, because they relate to subject matter [12] not required to be searched by this Authority, namely:

2.☐ Claim numbers_ _ _ _ _ _ _ _ _ _, because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)